# EUROPÄISCHE PATENTSCHRIFT

(11) **EP 1 424 267 B1**
(45) Veröffentlichungstag und Bekanntmachung des Hinweises auf die Patenterteilung: **08.11.2006**
(21) Anmeldenummer: 03026844.5
(22) Anmeldetag: 19.11.2003
(51) Int. Cl.: B62D 27/02, B60R 19/24, B62D 25/08

(54) **Fahrzeugkarosserie mit einem stirnseitig an einem Längsträger angebrachten Adapter**
Vehicle body having an adapter mounted frontally on a side frame
Carosserie de véhicule muni d'un adaptateur monté en tête de longeron

(30) Priorität: 29.11.2002 DE 10255877
(43) Veröffentlichungstag der Anmeldung: 02.06.2004
(73) Patentinhaber: Bayerische Motoren Werke Aktiengesellschaft, 80809 München (DE)
(72) Erfinder: Werberger, Stephan, 80937 München (DE); Lotter, Ralf, 80469 München (DE)

(56) Entgegenhaltungen:
- EP-A- 0 830 988
- DE-A- 19 509 541
- US-A- 6 010 155

## Beschreibung

Die Erfindung betrifft eine Fahrzeugkarosserie mit einem stirnseitig an einen Längsträger angebrachten Adapter gemäß des Oberbegriffs des Patentanspruchs 1.

Aus der DE 196 33 910 A1 ist ein Adapter zur Aufnahme eines Stoßfängers eines Kraftfahrzeugs bekannt, dessen Flansch mit einem Längsträger über einen Teil der Höhe der Seitenwände des Längsträgers verschweißt ist.

Aufgabe der Erfindung ist es, eine Fahrzeugkarosserie mit einem Adapter zu schaffen, der an einem Längsträger möglichst optimal angeschweißt ist.

Diese Aufgabe wird durch die Merkmale des Patentanspruchs 1 gelöst.

Erfindungsgemäß hat eine Fahrzeugkarosserie einen in Fahrzeuglängsrichtung nach vorne oder hinten ragenden Längsträger, wie beispielsweise ein Motorträger, an den stirnseitig ein Adapter angebracht ist, an den ein Frontend oder Stoßfänger anbringbar ist. Der Adapter weist zumindest einen Flansch auf, der mit zumindest einer Schweißnaht mit zumindest einer Seitenwand des Längsträgers verbunden ist, wobei die zumindest eine Schweißnaht bogenförmig verläuft.

Die meisten heutigen Längsträger haben einen polygonen, wie beispielsweise einen in etwa rechteckigen, Querschnitt, mit einer Ober- und einer Unterseite, sowie zumindest zwei Seitenwänden.

Gegenüber der bekannten geradlinigen Schweißnaht verlängert sich aufgrund der bogenförmigen Gestaltung die tragende Länge der Schweißnaht. Dadurch erhöhen sich die Kräfte, die die Schweißnaht bei einem Crash übertragen kann, bevor sie bricht. Zudem entstehen insbesondere bei einem Offset-Crash aufgrund des Frontends oder des Stoßfängers, der den Längsträger mit einem dazu parallelen weiteren Längsträger verbindet, Kippmomente zwischen dem Adapter und dem Längsträger, mit denen die Schweißnaht beaufschlagt wird. Die bogenförmige Anbindung stützt den Adapter dabei gegenüber dem Längsträger besser ab, als eine geradlinige Schweißnaht.

Darüber hinaus sind bei einer Schweißnaht, die beispielsweise MIG-geschweißt ist, die Anfangs- und Endkrater nur verhältnismäßig gering belastbar. Durch die bogenförmige Gestaltung der Schweißnaht sind die Kräfte in diesen Bereichen relativ gering. Die Geometrie der bogenförmigen Schweißnaht ist zwar komplexer als ein geradliniger Schweißnahtverlauf, aber dennoch so einfach, dass eine automatisierte Schweißung problemlos möglich ist.

Eine Schweißnaht gilt als bogenförmig, wenn sie nicht stetig geradlinig verläuft. Dazu zählen Schweißnähte, die beispielsweise C-förmig verlaufen, aber auch solche die aus zumindest zwei geradlinigen Abschnitten mit einer Unstetigkeitsstelle dazwischen, also beispielsweise V-förmig, verlaufen.

Idealerweise besteht der Adapter aus einem Strangpressprofil. Strangpressprofile sind einfach und preiswert herstellbar. Zur Realisierung der bogenförmigen Schweißnaht wird der Abschnitt des Strangpressprofils, der den zumindest einen Flansch des Adapters bildet, bevorzugt bogenförmig befräst. Der so hergestellte Adapter lässt sich auf einfache Weise mit dem bogenförmigen Flansch bogenförmig an eine Seitenwand des Längsträgers anschweißen.

Die Schweißnaht ist günstigerweise MIG (metall inert gas) geschweißt. Derartige Schutzgasschweißungen haben sich bereits im Fahrzeugbau mannigfach bewährt. Sie kommen insbesondere dort zum Einsatz, wo aufgrund der Gegebenheiten Punktschweißverbindungen nicht oder nur eingeschränkt einsetzbar sind.

In der Zeichnung ist ein Ausführungsbeispiel der Erfindung dargestellt, anhand dessen die Erfindung im folgenden näher beschrieben wird. Die Figuren zeigen in schematischer Darstellungsweise:
- **Fig. 1**: eine perspektivische Ansicht eines Längsträgers mit einem Adapter und
- **Fig. 2**: einen Schnitt durch den Längsträger mit dem Adapter von **Fig. 1**.

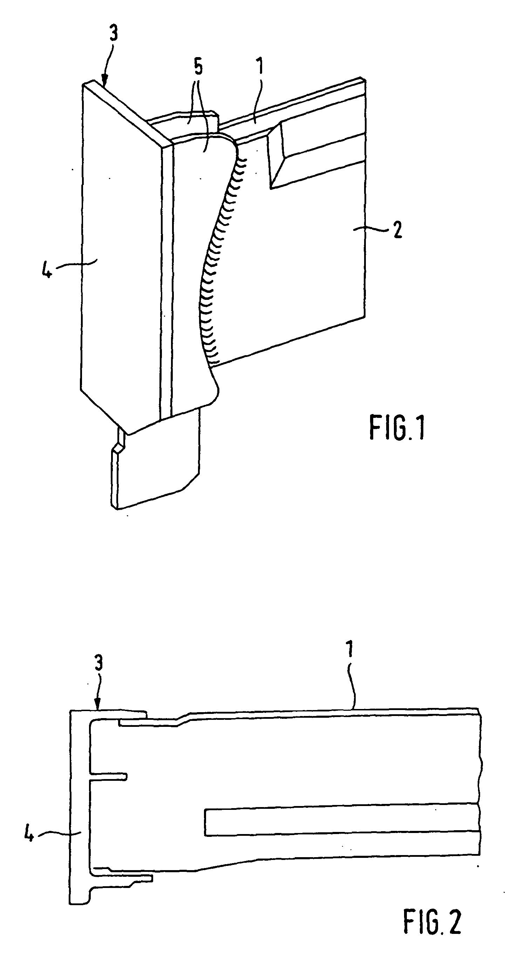

In **Fig. 1** und **Fig. 2** ist der vordere Endabschnitt eines Motorträgers 1 einer Fahrzeugkarosserie gezeigt. Der Motorträger 1 hat einen in etwa rechteckigen Querschnitt mit zwei hohen Seitenwänden 2. An der Stirnseite des Motorträgers 1 ist ein Adapter 3 angebracht, an dem ein Frontend bzw. ein Stoßfänger befestigt werden kann. Der Adapter 3 besteht aus einer Prallplatte 4 und zwei davon senkrecht abstehenden, zueinander parallelen Stegen 5, die als Flansche dienen. Mit den beiden Stegen 5 ist der Adapter 3 seitlich über die beiden Seitenwände 2 geschoben. Die Höhe der Stege 5 gegenüber der Prallplatte 4 ist an den Stegenden jeweils am größten und verläuft zwischen den Stegenden bogenförmig. Entlang dieser bogenförmigen Kanten sind die beiden Stege 5 jeweils mit den Seitenwänden 2 des Motorträgers 1 MIG verschweißt. Der Adapter 3 besteht aus einem abgelängten Strangpressprofil, dessen Stege nachträglich so befräst wurden, dass die Bogenform entstand.

## Patentansprüche

1. Fahrzeugkarosserie mit einem stirnseitig an einen in Fahrzeuglängsrichtung nach vorne oder hinten ragenden Längsträger (1) angebrachten Adapter (3), an den ein Frontend oder Stoßfänger anbringbar ist, wobei der Adapter (3) zumindest einen Flansch (5) aufweist, der mit zumindest einer Schweißnaht mit zumindest einer Seitenwand (2) des Längsträgers (1) verbunden ist, **dadurch gekennzeichnet, dass** die zumindest eine Schweißnaht bogenförmig verläuft.

2. Fahrzeugkarosserie nach Anspruch 1, **dadurch gekennzeichnet, dass** der Adapter (3) aus einem Strangpressprofil besteht.

3. Fahrzeugkarosserie nach Anspruch 2, **dadurch gekennzeichnet, dass** der zumindest eine Flansch (5) bogenförmig befräst ist.

4. Fahrzeugkarosserie nach einem der vorhergehenden Ansprüche, **dadurch gekennzeichnet, dass** die Schweißnaht MIG-geschweißt ist.

## Claims

1. A vehicle body comprising an adapter (3) mounted on a longitudinal beam (1) extending forwards or backwards in the longitudinal direction of the vehicle, a bumper being attachable to the front end of the adapter, wherein the adapter (3) has at least one flange (5) connected by at least one weld to at least one side (2) of the longitudinal beam (1), **characterised in** the at least one weld is arcuate.

2. A vehicle body according to claim 1, **characterised in that** the adapter (3) is an extruded profile.

3. A vehicle body according to claim 2, **characterised in that** the at least one flange (5) is milled in an arcuate shape.

4. A vehicle body according to any of the preceding claims, **characterised in that** the seam is MIG welded.

## Revendications

1. Carrosserie de véhicule équipée d'un adaptateur (3) monté en tête d'un longeron (1) saillant vers l'avant ou vers l'arrière, sur lequel un élément frontal ou un pare-chocs peut être placé, l'adaptateur (3) comprenant au moins une semelle (5), assemblée par au moins une soudure à au moins une face latérale (2) du longeron (1),
**caractérisée en ce que**
la ou les soudures sont arquées.

2. Carrosserie de véhicule selon la revendication 1,
**caractérisée en ce que**
l'adaptateur (3) est un profilé extrudé.

3. Carrosserie de véhicule selon la revendication 2,
**caractérisée en ce que**
la ou les semelles (5) sont fraisées en forme d'arc.

4. Carrosserie de véhicule selon l'une des revendications précédentes,
**caractérisée en ce que**
la soudure est réalisée par soudage MIG (sous gaz inerte avec métal d'apport).
